# EUROPÄISCHE PATENTANMELDUNG

(11) **EP 4 495 469 A1**
(43) Veröffentlichungstag der Anmeldung: **22.01.2025**
(21) Anmeldenummer: 24183588.3
(22) Anmeldetag: 21.06.2024
(51) Int. Cl.: F16L 3/10, F16L 3/22, F16L 3/227, H02G 3/32

(54) **SCHELLE**

(30) Priorität: 20.07.2023 DE 202023104078 U
(71) Anmelder: OBO Bettermann Hungary Kft., 2347 Bugyi (HU)
(72) Erfinder: DANYIS, Tàmas, 2370 Dabas (HU); KARDOS, Gyula, 2040 Budaörs (HU)
(74) Vertreter: Haverkamp Patentanwälte PartG mbB

(57) **Zusammenfassung**

Die Erfindung betrifft eine Schelle zum Festlegen eines Langgutes, etwa eines Rohres oder eines Kabels, umfassend ein festlegbares Unterteil 2 mit einer seitlich durch jeweils einen Verbindungsarm 5, 5.1 begrenzten Langgutaufnahme, von welchen Verbindungsarmen 5, 5.1 zumindest einer an seiner von der Langgutaufnahme wegweisenden Seite Rastzähne trägt, und umfassend ein Oberteil 3 zum Verschließen der Schelle 1, welches Oberteil 3 zwei zu den Verbindungsarmen 5, 5.1 des Unterteils 2 komplementäre und mit diesen in Eingriff stellbarer Verbindungsarme 12, 12.1 aufweist, von denen der zu dem die Rastzähne tragenden Verbindungsarm 5, 5.1 des Unterteils 2 komplementäre Verbindungsarm 12, 12.1 des Oberteils 3 an seiner Innenseite Rastzähne trägt, die bei geschlossener Schelle 1 mit den Rastzähnen des Verbindungsarms 5, 5.1 des Unterteils 2 in Eingriff gestellt sind, wobei der Verbindungsarm 5, 15.1 des Unterteils 2 gegenüber demjenigen des Oberteils 3 in Richtung zur Langgutaufnahme hin verstellbar ist und der die Rastzähne tragende Verbindungsarm 12, 12.1 des Oberteils 3 über eine auf den komplementären Verbindungsarm 5, 5.1 des Unterteils 2 wirkende Lösehandhabe 16, 16.1 verfügt, durch die, wenn betätigt, der die Rastzähne tragende Verbindungsarm 5, 5.1 des Unterteils 2 in Richtung zur Langgutaufnahme hin verstellbar ist, um die Ineingriffstellung seiner Rastzähne mit denjenigen des Oberteils 3 zu lösen.

Besonderes Kennzeichen ist, dass die Verbindungsarme 12, 12.1 des Oberteils 3 einen U-förmigen Querschnitt aufweisen, wobei durch die beiden Schenkel 13, 13.1 und den Rücken 14 der U-förmigen Querschnittsprofilierung eine Aufnahme für den jeweils komplementären Verbindungsarm 5, 5.1 des Unterteils 2 bereitgestellt ist.

## Beschreibung

Gegenstand der Erfindung ist eine Schelle zum lösbaren Festlegen eines Langgutes, etwa eines Rohres oder eines Kabels, umfassend ein Unterteil und ein Oberteil.

Zum Festlegen von Kabeln als beispielhaftes Langgut werden unter anderem auch Schellen, die auch als Druckschellen angesprochen werden, eingesetzt. Derartige Schellen sind zweiteilig ausgeführt und umfassen ein als Sockel ausgebildetes Unterteil und ein mit diesem verbindbares Oberteil. Das Unterteil verfügt über eine Langgutauflage, auf der das mit der Schelle festzulegende Langgut aufliegt. Beide Teile verfügen jeweils über komplementäre Verbindungsarme, die zum Verschließen der Schelle miteinander in Eingriff gestellt werden. Hierzu gibt es unterschiedliche Ausführungen. Bei einer Ausführung, bei der eine Einstellbarkeit des Oberteils gegenüber dem Unterteil möglich ist und bei der somit das Oberteil unterschiedlich weit auf das Unterteil aufgeschoben werden kann, sind die jeweils komplementären Verbindungsarme mit jeweils einer Rastzahnung ausführt, die bei geschlossener Schelle miteinander in Eingriff gestellt sind. Die Querschnittsgeometrie der Rastzähne ist asymmetrisch, dergestalt, dass ein Aufschieben des Oberteils auf das Unterteil möglich, jedoch ein Abziehen blockiert ist. Aus diesem Grunde sind derartige Schellen nicht ohne Weiteres wieder zu öffnen, wenn etwa ein Wechsel des Langgutes vorgenommen werden soll.

Eine öffnenbare Schelle zum Festlegen von Rohren oder Kabeln ist aus EP 3 327 326 A1 bekannt. Diese vorbekannte Schelle verfügt im Unterteil über zwei benachbart zueinander angeordnete Langgutaufnahmen. Beide Langgutaufnahmen sind durch einen Steg voneinander getrennt. Mithin handelt es sich bei dieser Schelle um zwei miteinander verbundene Einzelschellen, die jedoch als eine Schelle hergestellt sind. Die Verbindungsarme tragen an ihren zueinander weisenden Seiten Rastzahnungen. Zum Verschließen einer Langgutaufnahme dient ein Schubstück, welches entsprechend dem Durchmesser des zu haltenden Langgutes zwischen die beiden Verbindungsarme des Unterteils entsprechend unterschiedlich weit eingeschoben wird. Die Rastzähne des Schubstückes sind jeweils an Federn angeordnet. Zwei Federn, die mit einander bezüglich der Langgutaufnahme gegenüberliegenden Rastzahnungen in Eingriff zu stellen sind, sind durch ein Griffstück miteinander verbunden. Bei einer Bedienung des Griffstückes durch welches das die beiden Federn verbindende Griffstück gebogen wird, verringert sich der Abstand der Federn voneinander, wodurch die Ineingriffstellung der Rastzähne des Schubstückes mit denjenigen der Verbindungsarme des Unterteils gelöst wird. Die Ineingriffstellung der komplementären Rastzähne wird somit durch Heraushebeln derjenigen des Schubstückes von denjenigen des Verbindungsarmes unterteilt aufgehoben. Die Herstellung einer solchen Schelle, insbesondere des Schubstückes ist aufwendig und daher kostenträchtig.

Ausgehend von dem vorstehend diskutierten Stand der Technik liegt der Erfindung daher die Aufgabe zugrunde, eine Schelle zum Festlegen eines Langgutes, wie etwa eines Rohres oder Kabels vorzuschlagen, die nicht nur einfach und kostengünstig in ihrer Herstellung, sondern auch bei Bedarf ohne Weiteres werkzeuglos geöffnet werden kann.

Gelöst wird diese Aufgabe erfindungsgemäß durch eine Schelle mit den Merkmalen des Anspruchs 1.

Vorteile dieser Schelle und vorteilhafte Weiterbildungen sind Gegenstand der Unteransprüche sowie der Beschreibung.

Bei dieser Schelle verfügt das als Sockel der Schelle dienende Unterteil über zwei seitlich eine Langgutaufnahme einfassende Verbindungsarme. Zumindest einer von diesen trägt an seiner von der Langgutaufnahme wegweisenden Seite eine Rastzahnung. Diese ist typischerweise durch mehrere Rastzähne realisiert, welche Rastzähne in Richtung der Längserstreckung des Verbindungsarmes aneinander angereiht sind. Dieser die Rastzahnung tragende Verbindungsarm des Unterteils ist in Richtung zur Langgutaufnahme mit einer gewissen Krafteinwirkung verstellbar. Diese Verstellbarkeit resultiert typischerweise aus der Materialelastizität und der Geometrie des zur Herstellung des Unterteils eingesetzten Materials. Typischerweise handelt es sich hierbei um ein Kunststoffspritzgussteil, hergestellt aus nur einem für derartige Schellen typischen Kunststoff, beispielsweise Polyamid. Das Unterteil ist bezüglich seiner unterseitig durch die Langgutauflage begrenzten Langgutaufnahme in Richtung zu dem zu montierenden Oberteil offen, sodass bei abgenommenem Oberteil in die Langgutaufnahme ein Langgut eingelegt oder auch herausgenommen werden kann.

Das Oberteil dieser Schelle verfügt ebenfalls über zwei Verbindungsarme. Diese sind komplementär zu den Verbindungsarmen des Unterteils ausgeführt, sodass diese miteinander in Eingriff gestellt werden können. Diese Ineingriffstellung umfasst eine Führung des einen Verbindungsarms in bzw. an dem komplementären Verbindungsarm des jeweils anderen Teils. Bezüglich des die Rastzahnung tragenden Verbindungsarms des Unterteils umfasst die Ineingriffstellung des komplementären, dem Oberteil zugehörigen Verbindungsarmes, der mit einer komplementären Rastung ausgerüstet ist, auch eine Ineingriffstellung der Rastzähne miteinander. Gemäß einem bevorzugten Ausführungsbeispiel sind die Verbindungsarme des Oberteils mit einem U-förmigen Querschnitt ausgeführt, sodass durch die Schenkel und den die Schenkel verbindenden Rücken eine Aufnahme zur Aufnahme des Verbindungsarmunterteils bereitgestellt ist. Durch diese Maßnahme ist das Oberteil Richtung der Längserstreckung der Langgutaufnahme bei geschlossener Schelle formschlüssig an das Unterteil angeschlossen.

Der Abstand der nach außen weisenden Seiten der Verbindungsarme des Unterteils voneinander und der Abstand der Innenseiten der Verbindungsarme des Oberteils sind vorteilhafterweise so zueinander eingerichtet, dass bei geschlossener Schelle die Verbindungsarme des Unterteils unter einer gewissen Vorspannung gegen die Innenseiten der Verbindungsarme des Oberteils wirken. Hierdurch ist nicht nur ein spielfreier Sitz, sondern auch ein dauerhafter Eingriff der miteinander in Eingriff gestellten Rastzähne sichergestellt.

Bei der erfindungsgemäßen Schelle ist der zumindest eine die Rastung tragende Verbindungsarm in Bezug auf die gewünschte Verrastung mit dem Oberteil das elastisch reagierende Element. Diese für die Verrastung erforderliche Verstellbarkeit dieses Verbindungsarmes wird bei dieser Schelle auch zum Lösen der Rastverriegelung genutzt. Die Verbindungsarme des Oberteils sind bei dieser Schelle in Bezug auf die Verbindungsarme des Unterteils außenliegend. Der die Rastung tragende Verbindungsarm des Oberteils verfügt über eine Lösehandhabe, die, wenn betätigt, gegen den komplementären Verbindungsarm des Unterteils wirkt, um diesen in Richtung zur Langgutaufnahme hin zu verstellen, sodass die Rastzähne dieses Verbindungsarmes aus der Ineingriffstellung mit den Rastzähnen des Oberteils herausgebracht werden. Hierdurch wird die Ineingriffstellung der Rastzähne dieser beiden Verbindungsarme aufgehoben. Dann kann das Oberteil ohne Weiteres vom Unterteil abgezogen werden.

Auch wenn ein sicherer Verschluss einer solchen Schelle bereits bei Vorsehen nur jeweils eines Verbindungsarmes von Oberteil und Unterteil mit einer Rastung möglich ist, ist eine Ausgestaltung bevorzugt, bei der beide Verbindungsarme von Oberteil und Unterteil mit einer entsprechenden Rastung ausgerüstet sind und sodann bei geschlossener Schelle beide Verbindungsarme des Oberteils mit ihrer jeweiligen Rastung mit denjenigen der komplementären Verbindungsarme des Unterteils in Eingriff gestellt sind. Beide Verbindungsarme verfügen bei einem solchen Ausführungsbeispiel über eine solche Lösehandhabe. Ein Lösen des Oberteils einer solchen Schelle von dem Unterteil ist dann zudem dadurch vereinfacht, da dann die beiden Lösehandhaben aufeinander zubewegt werden können, was die Handhabbarkeit vereinfacht.

Die Lösehandhabe eines eine Rastung tragenden Verbindungsarmes des Oberteils ist gemäß einem bevorzugten Ausführungsbeispiel nach Art eines verschwenkbaren Stellhebels ausgeführt. Dieser befindet sich in dem Rücken des Verbindungsarmes und ist durch Aussparungen von den übrigen Bestandteilen des Verbindungsarmes des Oberteils getrennt. Lediglich im Bereich seiner Wurzel, die sich im Bereich des unteren, zum Unterteil weisenden Abschlusses des Verbindungsarmes befindet, ist die Lösehandhabe an die übrigen Bestandteile des Oberteils angeformt.

Vorzugsweise verfügt der eine Rastung tragende Verbindungsarm des Unterteils über eine in Bezug auf seine Quererstreckung (Erstreckung parallel zur Langgutaufnahme) rastzahnfreie Zone. Die rastfreie Zone erstreckt sich typischerweise über die gesamte Längserstreckung des Verbindungsarmes. Dieses ist derjenige Bereich des Verbindungsarmes des Unterteils, auf den die Lösehandhabe des Oberteils wirkt. Vorzugsweise befindet sich diese rastzahnfreie Zone zwischen zwei Zahnreihen, die die Rastung dieses Verbindungsarmes darstellen.

Die Lösehandhaben weisen innenseitig zweckmäßigerweise eine Ausformung zum Bereitstellen einer Stellkontur auf. Eine solche Stellkontur ist gemäß einem Ausführungsbeispiel dergestalt ausgeführt, dass die den Verbindungsarm des Unterteils kontaktierende Kontaktfläche eine geringere Breite aufweist als die Breite der Lösehandhabe, vorzugsweise im Bereich ihres verschwenkbaren Stellhebels. Entsprechend geringer ist die zum Abziehen des Oberteils vom Unterteil zu überwindende Reibung. Zweckmäßig ist es, wenn eine solche Lösungshandhabe ein von der übrigen Kontur des Oberteils abragendes Betätigungselement aufweist. Dieses kann von dem Rücken des Verbindungsarmes in Richtung zur Mitte des Oberteils hin versetzt angeordnet sein. Dieses verbessert die Griffergonomie im Falle eines gewünschten Lösens. Zugleich wird hierdurch Platz geschaffen, um das Oberteil fluchtend mit der Längserstreckung seiner Verbindungsarme auf das Unterteil aufzudrücken. Für die Handhabung und Ergonomie günstig wird ebenfalls angesehen, wenn das Oberteil in seiner Mitte einen Steg, typischerweise bügelförmig nach oben ausgeformt, als Handhabungsfläche aufweist. Ein solcher Steg verbindet typischerweise die die beiden Verbindungsarme verbindenden Querseitenwände des Oberteils.

Die Verstellbarkeit des die Rastzahnung tragenden Verbindungsarms des Unterteils kann durch Ausbildung eines Gelenkes im Bereich der Anbindung des Verbindungsarmes an die übrigen Bestandteile des Oberteils vorgesehen sein, beispielsweise durch eine ein Gelenk bildende Schwächezone. Hierbei kann es sich beispielsweise um eine Materialschwächung, hervorgerufen durch eine reduzierte Querschnittsfläche handeln, etwa eine Nut.

Das Unterteil verfügt typischerweise über ein oder mehrere Befestigungsdurchbrechungen, um dieses mittels zumindest eines Befestigers an einem Befestigungsgrund festzulegen. Anstelle oder auch ergänzend hierzu kann das Unterteil an einer oder an beiden Seitenwänden, jeweils benachbart zu einem Verbindungsarm, mit einer Anreihkontur ausgerüstet sein. Dann lässt sich eine solche Schelle problemlos mit weiteren mit einer derartigen Anreihkontur ausgerüsteten Schellen zu einer Sammelschelle verbinden.

Die Erfindung ist nachfolgend anhand eines Ausführungsbeispiels unter Bezugnahme auf die beigefügten Figuren beschrieben. Es zeigen:
- **Fig. 1:**: In einer perspektivischen Darstellung eine Schelle zum Festlegen eines Langgutes, umfassend ein Unterteil und ein Oberteil, in einer Vormontagestellung der beiden Teile zueinander,
- **Fig. 2:**: eine perspektivische Ansicht von unten in das Oberteil der Schelle der Figur 1,
- **Fig. 3:**: das auf das Unterteil aufgesetzte Oberteil der Schelle der Figur 1 in einer ersten Stellung der beiden Teile zueinander,
- **Fig. 4:**: das auf das Unterteil aufgesetzte Oberteil der Schelle der Figur 1 in einer weiteren Stellung der beiden Teile zueinander und
- **Fig. 5:**: eine Seitenansicht der Schelle in einer Positionierung von Oberteil und Unterteil zu einander gemäß Figur 3 mit einem darin gehaltenen Kabel als Langgut.

Eine Schelle 1 dient zum Festlegen etwa eines Kabels an einem Befestigungsgrund. Die Schelle 1 ist nach Art einer sogenannten Druckschelle ausgeführt und umfasst ein Unterteil 2 und ein Oberteil 3. Bei den beiden Teilen 2, 3 der Schelle 1 handelt es sich um Kunststoffspritzgussteile, bei dem dargestellten Ausführungsbeispiel aus Polyamid.

Das Unterteil 2 verfügt über einen Sockel 4, an dem zwei Verbindungsarme 5, 5.1 nach oben abragend angeformt sind. Die Verbindungsarme 5, 5.1 dienen zum Verbinden des Unterteils 2 mit dem Oberteil 3. Die die Breite des Sockels bestimmenden Seitenwände 6 tragen oberseitig jeweils eine konkav geformte Langgutaufnahme 7, 7.1. Diese Seitenwände 6 mit ihren oberseitigen Langgutauflagen 7, 7.1 sind so weit voneinander beabstandet, dass die Verbindungsarme 5, 5.1 dazwischen hineinpassen. Die Langgutauflagen 7, 7.1 sind oberseitig mit Fixierdornen ausgerüstet. Diese greifen in den äußeren Isoliermantel eines als Langgut von der Schelle gehaltenen Kabels ein, sodass dieses auch formschlüssig in Richtung seiner Längserstreckung bei geschlossener Schelle 1 gehalten ist. Die die Schmalseiten des Sockels 4 bestimmenden Seiten sind jeweils mit einer Anreihkontur 8, 8.1 ausgerüstet. Die Auslegung der Anreihkonturen 8, 8.1 sind komplementär zueinander ausgeführt, sodass die Anreihkontur 8.1 mit der Anreihkontur 8 einer zweiten Schelle in Eingriff gestellt werden kann und umgekehrt. Auf diese Weise können mehrere Schellen 1 zu einer Sammelschelle zusammengesetzt werden.

In den Boden des Sockels 4 ist eine Befestigeröffnung eingebracht (in den Figuren nicht dargestellt). Somit kann das Unterteil mit einem Befestiger an dem Befestigungsgrund festgelegt werden.

Im Folgenden ist der Verbindungsarm 5 des Unterteils 2 beschrieben. Da beide Verbindungsarme 5, 5.1 gleich aufgebaut sind, gelten die nachfolgenden Ausführungen gleichermaßen für den Verbindungsarm 5.1. Der Verbindungsarm 5 ist nach Art einer Leiste ausgeführt, dessen Breite sich parallel zu den die Anreihkonturen 8, 8.1 aufweisenden Seiten des Sockels 4 erstreckt. Der Verbindungsarm 5 trägt an seiner von der Langgutauflage bzw. der oberhalb dieser befindlichen Langgutaufnahme wegweisenden Seite eine Rastzahnung. Bei dem dargestellten Ausführungsbeispiel ist diese durch zwei Rastzahnreihen 9, 9.1 realisiert. Die beiden Rastzahnreihen 9, 9.1 schließen bündig mit dem Rand des Verbindungsarmes 5 ab und sind voneinander beabstandet. Zwischen den Rastzahnreihen 9, 9.1 befindet sich eine rastzahnfreie Zone 10. Die Rastzähne der Rastzahnreihen 9, 9.1 sind asymmetrisch geformt, sodass zwar ein Aufschieben des Oberteils 3 auf das Unterteil 2 ohne Weiteres möglich, jedoch ein Abziehen blockiert ist. Daher sind die nach oben weisenden Flanken der Zähne geneigt, während die unterseitigen Flanken der Zähne rechtwinkelig zu der Ebene des Verbindungsarmes 5 verlaufen. Im Bereich der Wurzel, d. h.: der Anbindung des Verbindungsarmes 5 an den Sockel 4 ist eine Dünnstelle 11 durch eine Materialreduzierung vorgesehen. Hierdurch ist eine gewisse Gelenkigkeit des Verbindungsarmes 5 gegenüber dem Sockel 4 bereitgestellt.

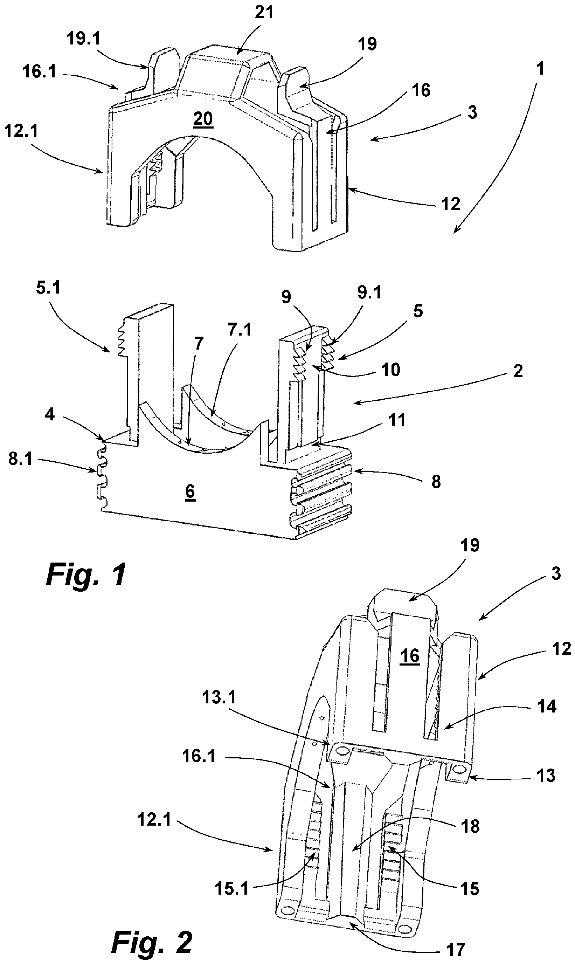

Das Oberteil 3 verfügt über zwei, zu den Verbindungsarmen 5, 5.1 des Unterteils 2 komplementäre Verbindungsarme 12, 12.1. Die Verbindungsarme 12, 12.1 sind im Querschnitt U-förmig ausgeführt, wie dieses auch aus der perspektivischen Darstellung des Oberteils von unten in der Figur 2 erkennbar ist. Die U-förmige Querschnittsgeometrie der Verbindungsarme 12, 12.1 wird durch zwei Schenkel 13, 13.1 sowie einen die Schenkel 13, 13.1 verbindenden Rücken 14 bereitgestellt. Der Abstand der Schenkel 13, 13.1 ist so bemessen, dass darin der jeweilig komplementäre Verbindungsarm 5, 5.1 des Unterteils 2 mit dem notwendigen Bewegungsspiel einpasst. Die oberteilseitigen Verbindungsarme 12, 12.1 tragen innenseitig ebenfalls eine Rastung. Diese ist komplementär zu der Rastung der unterteilseitigen Verbindungsarme 5, 5.1 ausgeführt. Die Rastung der Verbindungsarme 12, 12.1 des Oberteils ist in der Darstellung Figur 2 an dem Verbindungsarm 12.1 erkennbar. Angeformt an die Innenseiten der Schenkel 13, 13.1 und den Rücken 14 befindet sich jeweils eine Rastzahnreihe 15, 15.1. Die Zähne dieser Rastreihen 15, 15.1 sind gegensinnig zu den Rastzähnen der Rastzahnreihen 9, 9.1 ausgeführt. Damit sind die nach oben weisenden Flanken rechtwinkelig zur Ebene des Verbindungsarmes 12.1 ausgeführt, während die nach unten weisenden Flanken geneigt sind.

Teil des Rückens 14 ist auch eine Lösehandhabe 16, 16.1. Diese ist durch seitliche Aussparungen von den übrigen Bestandteilen des Rückens 14 getrennt. Die Lösungshandhabe 16 kann daher um ihre Anbindung an die übrigen Bestandteile des Rückens 14 und somit in Richtung zu der Langgutaufnahme hin elastisch verstellt werden. Die Elastizität resultiert aus dem zum Herstellen des Oberteils 3 eingesetzten Kunststoffmaterial. Während die Außenseite der Lösehandhabe 16 an dem Verbindungsarm 12 in Figur 2 gut zu erkennen ist, ist deren Innenseite anhand der Lösehandhabe 16.1 des Verbindungsarmes 12.1 erkennbar. Innenseitig verfügen die Lösehandhaben 16, 16.1 jeweils über eine Stellkontur 17. Gegenüber der außenseitigen Breite der jeweiligen Lösungshandhabe 16, 16. 1 weist diese eine hinsichtlich ihrer Breite reduzierte Stellfläche 18 auf, mit der die Lösehandhabe 16, 16.1 bei ihrer Betätigung den komplementären Verbindungsarm 12 bzw. 12.1 in seiner rastzahnfreien Zone 10 kontaktiert. Die Lösungshandhaben 16, 16.1 verfügen jeweils über ein Griffstück 19, 19.1 als Betätigungshandhabe, die gegenüber der Längserstreckung der jeweiligen Lösungshandhabe 16, 16.1 im Bereich ihrer innenseitigen Stellkontur 17 in Richtung zur Mitte des Oberteils 3 hin versetzt angeordnet sind. Hierdurch wird der Abstand der beiden Griffstücke 19, 19.1 voneinander reduziert.

Die beiden Verbindungsarme 12, 12.1 des Oberteils 3 sind durch zwei Querseitenwände 20 miteinander verbunden. Diese Seitenwände 20 sind Fortsätze der jeweiligen zueinander weisenden Schenkel 13, 13.1 der Verbindungsarme 12, 12.1. Die Seitenwände 20 sind mittig in Bezug auf die Breite des Oberteils 3 durch einen bügelartig ausgeführten Steg 21 miteinander verbunden. Der Steg 21 ist ausgeführt, damit die Griffstücke 19, 19.1 zur Betätigung der Lösungshandhaben 16, 16.1 bis unter diesen verstellt werden können. Dann dienen die zu den Griffstücken 19, 19.1 weisenden Längsseiten des Steges 21 bei aktivierten Lösungshandhaben 16, 16.1 als Griffhandhaben. Bei beispielsweise mit einem Daumen und einem Zeigefinger aufeinander zu bewegten Griffstücken 19, 19.1, durch die das Oberteil 3 gegenüber dem Unterteil 2 entriegelt ist, dienen dann die Längsseiten des Steges 21, unter den die Griffstücke 19, 19.1 gedrückt worden sind als Widerlager bzw. Angriffspunkt zum Abziehen des Oberteils 3 von dem Unterteil 2. Die zum Unterteil 2 weisenden Stirnseiten der Seitenwände 20 sind ebenfalls mit Fixierdornen ausgerüstet (siehe Figur 2).

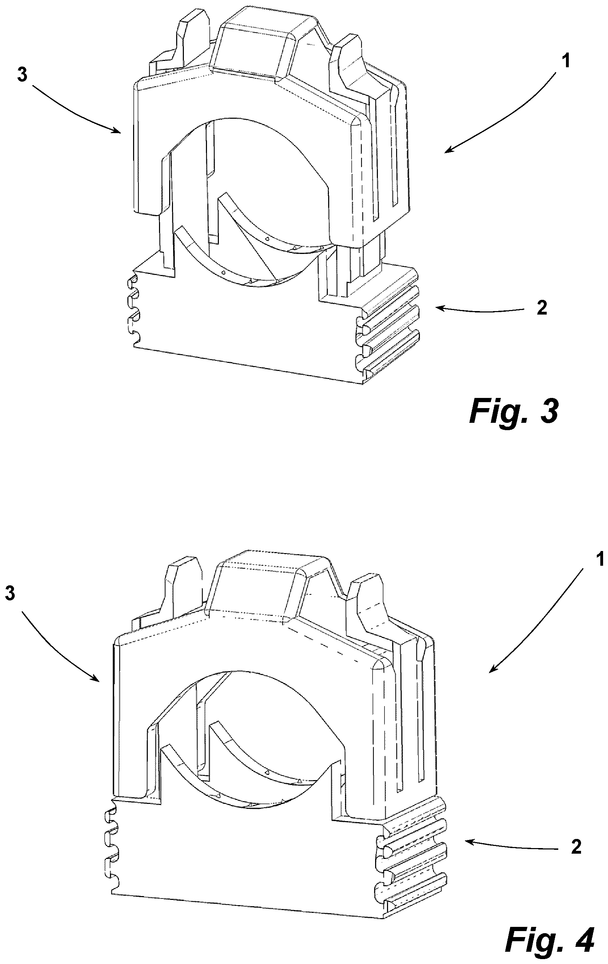

Zum Schließen der Schelle 1, nachdem ein Langgut in die Langgutaufnahme des Unterteils 2 eingelegt worden ist, wird das Oberteil 3 mit seinen Verbindungsarmen 12, 12.1 auf die komplementären Verbindungsarme 5, 5.1 des Unterteils 2 aufgesetzt. Die zueinander weisenden Kanten der jeweils komplementären Verbindungsarmpaare sind zu diesem Zweck jeweils mit einer Fase oder einer gekrümmten Kantenausbildung versehen. Mit sukzessivem Aufschieben des Oberteils 3 auf das Unterteil 2 werden die komplementären Rastungen miteinander in Eingriff gestellt. Figur 3 zeigt die Schelle 1 mit dem in einer ersten Stellung bezüglich des Unterteils 2 befindlichen Oberteil 3. Das Oberteil 3 wird soweit auf das Unterteil 2 aufgeschoben, bis das in der Langgutaufnahme des Unterteils 2 befindliche Langgut zwischen Oberteil 3 und Unterteil 2 eingeklemmt ist. Typischerweise wird so viel Kraft aufgewendet, dass die Fixierdorne in die den äußeren Mantel des Langgutes eindringen. Figur 4 zeigt die geschlossene Schelle 1 mit vollständig auf das Unterteil 2 aufgeschobene Oberteil 3.

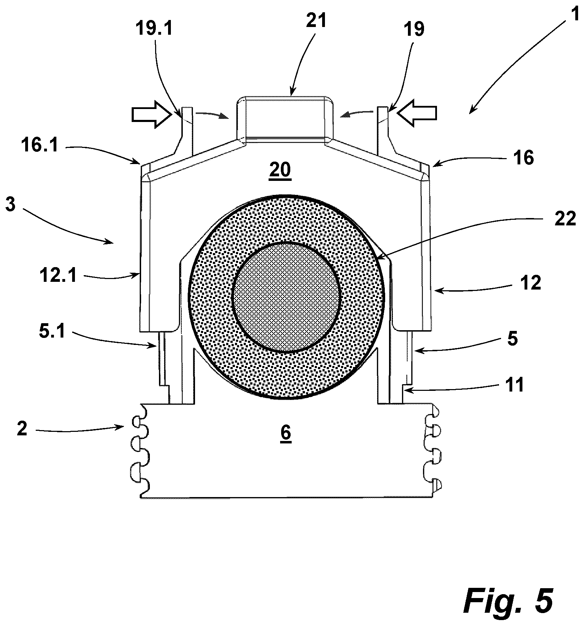

In Figur 5 ist die Schelle 1 in Benutzung gezeigt. Von der Schelle 1 wird ein Kabel 22 gehalten, und zwar eingeklemmt zwischen den Langgutauflagen 7, 7.1 des Unterteils 2 und den Stirnflächen der Seitenwände 20 des Oberteils 3. Die Stirnseiten der Seitenwände 20 und die Langgutauflagen 7, 7.1 fluchten miteinander.

Soll die Schelle 1 geöffnet werden, etwa weil das Kabel 22 gegen ein anderes ausgetauscht werden soll, werden die beiden Griffstücke 19, 19.1 der Lösehandhaben 16, 16.1, wie in Figur 5 durch die Pfeile angedeutet, aufeinander zubewegt. Mit den Stellflächen 18 der Stellkonturen 17 wirken diese gegen die rastzahnfreien Zonen 10 der Verbindungsarme 5, 5.1 des Unterteils 2, die aus diesem Grund nach innen in Richtung zu dem Kabel 22 verstellt werden. Hierdurch werden die miteinander in Eingriff gestellten Zahnungen der komplementären Verbindungsarme 5, 12 bzw. 5.1, 12.1 voneinander gelöst, sodass dann das Oberteil 3 ohne Weiteres von dem Unterteil 2 abgezogen werden kann.

Von Vorteil bei der Schelle 1 ist auch, dass ein Öffnen und Schließen derselben vielfach wiederholt werden kann, ohne Einbußen an die Qualität der Verbindung zwischen Unterteil 2 und Oberteil 3 hinnehmen zu müssen.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Schelle
- 2: Unterteil
- 3: Oberteil
- 4: Sockel
- 5, 5.1: Verbindungsarm
- 6: Seitenwand
- 7, 7.1: Langgutauflage
- 8, 8.1: Anreihkontur
- 9, 9.1: Rastzahnreihe
- 10: rastzahnfreie Zone
- 11: Dünnstelle
- 12, 12.1: Verbindungsarm
- 13, 13.1: Schenkel
- 14: Rücken
- 15, 15.1: Rastzahnreihe
- 16, 16.1: Lösehandhabe
- 17: Stellkontur
- 18: Stellfläche
- 19, 19.1: Griffstück
- 20: Seitenwand
- 21: Steg
- 22: Kabel

## Patentansprüche

1. Schelle zum Festlegen eines Langgutes, etwa eines Rohres oder eines Kabels, umfassend ein festlegbares Unterteil (2) mit einer seitlich durch jeweils einen Verbindungsarm (5, 5.1) begrenzten Langgutaufnahme, von welchen Verbindungsarmen (5, 5.1) zumindest einer an seiner von der Langgutaufnahme wegweisenden Seite Rastzähne trägt, und umfassend ein Oberteil (3) zum Verschließen der Schelle (1), welches Oberteil (3) zwei zu den Verbindungsarmen (5, 5.1) des Unterteils (2) komplementäre und mit diesen in Eingriff stellbare Verbindungsarme (12, 12.1) aufweist, von denen der zu dem die Rastzähne tragenden Verbindungsarm (5, 5.1) des Unterteils (2) komplementäre Verbindungsarm (12, 12.1) des Oberteils (3) an seiner Innenseite Rastzähne trägt, die bei geschlossener Schelle (1) mit den Rastzähnen des Verbindungsarms (5, 5.1) des Unterteils (2) in Eingriff gestellt sind, wobei der Verbindungsarm (5, 15.1) des Unterteils (2) gegenüber demjenigen des Oberteils (3) in Richtung zur Langgutaufnahme hin verstellbar ist und der die Rastzähne tragende Verbindungsarm (12, 12.1) des Oberteils (3) über eine auf den komplementären Verbindungsarm (5, 5.1) des Unterteils (2) wirkende Lösehandhabe (16, 16.1) verfügt, durch die, wenn betätigt, der die Rastzähne tragende Verbindungsarm (5, 5.1) des Unterteils (2) in Richtung zur Langgutaufnahme hin verstellbar ist, um die Ineingriffstellung seiner Rastzähne mit denjenigen des Oberteils (3) zu lösen.

2. Schelle nach Anspruch 1, **dadurch gekennzeichnet, dass** die Verbindungsarme (12, 12.1) des Oberteils (3) einen U-förmigen Querschnitt aufweisen, wobei durch die beiden Schenkel (13, 13.1) und den Rücken (14) der U-förmigen Querschnittsprofilierung eine Aufnahme für den jeweils komplementären Verbindungsarm (5, 5.1) des Unterteils (2) bereitgestellt ist.

3. Schelle nach Anspruch 2, **dadurch gekennzeichnet, dass** die Lösehandhabe (16, 16.1) des zumindest einen Verbindungsarms (12, 12.1) des Oberteils (3) nach Art eines verschwenkbaren, innerhalb des Rückens (14) angeordneten Stellhebels ausgeführt ist.

4. Schelle nach einem der Ansprüche 1 bis 3, **dadurch gekennzeichnet, dass** der zumindest eine, die Rastzähne tragende Verbindungsarm (5, 5.1) des Unterteils (2) in Bezug auf seine Quererstreckung eine rastzahnfreie Zone (10) aufweist und die Lösehandhabe (16, 16.1) des komplementären Verbindungsarms (12, 12.1) des Oberteils (3) eingerichtet ist, zum Verstellen des Verbindungsarms (5, 5.1) des Unterteils (2) auf seine rastzahnfreie Zone (10) zu wirken.

5. Schelle nach Anspruch 4, **dadurch gekennzeichnet, dass** die Innenseite der Lösehandhabe (16, 16.1) eine der Längserstreckung derselben folgende Stellkontur (17) aufweist.

6. Schelle nach Anspruch 4 oder 5, **dadurch gekennzeichnet, dass** die Lösehandhabe (16, 16.1) über ein Betätigungselement, insbesondere ein Griffstück (19, 19.1) zum manuellen Betätigen der Lösehandhabe (16, 16.1) verfügt.

7. Schelle nach Anspruch 6, **dadurch gekennzeichnet, dass** das Betätigungselement (19, 19.1) gegenüber dem Abschnitt der Lösehandhabe (16, 16.1) mit ihrer Stellkontur (17) in Richtung zur Mitte des Oberteils (3) hin versetzt angeordnet ist.

8. Schelle nach einem der Ansprüche 1 bis 7, **dadurch gekennzeichnet, dass** das Oberteil (3) zwei seine Verbindungsarme (12, 12.1) verbindende Seitenwände (20) aufweist, die im Bereich der Mitte des Oberteils (3) durch einen insbesondere bügelförmig ausgeführten Steg (21) miteinander verbunden sind.

9. Schelle nach einem der Ansprüche 4 bis 8, **dadurch gekennzeichnet, dass** der zumindest eine Rastzähne tragende Verbindungsarm (5, 5.1) des Unterteils (2) zwei voneinander durch die rastzahnfreie Zone (10) beabstandet Rastzahnreihen (9, 9.1) aufweist.

10. Schelle nach einem der Ansprüche 1 bis 9, **dadurch gekennzeichnet, dass** der zumindest eine rastzahntragende Verbindungsarm (5, 5.1) des Unterteils (2) im Bereich seiner Wurzel, mit der dieser an die übrigen Bestandteile des Oberteils (3) angeschlossen ist, eine ein Gelenk bildende Schwächezone aufweist.

11. Schelle nach einem der Ansprüche 1 bis 10, **dadurch gekennzeichnet, dass** die Rastzähne eine asymmetrische Querschnittsfläche aufweisen, durch die ein Abziehen des Oberteils (3) zum Unterteil (2) ohne eine Lösehandhabebetätigung blockiert ist.

12. Schelle nach einem der Ansprüche 1 bis 11, **dadurch gekennzeichnet, dass** beide Verbindungsarme (5, 5.1; 12, 12.1) von Unterteil (2) bzw. Oberteil (3) gleich ausgeführt sind.

13. Schelle nach einem der Ansprüche 1 bis 12, **dadurch gekennzeichnet, dass** zumindest eine Seitenwand des Unterteils (2) mit einer Anreihkontur (8, 8.1) ausgerüstet ist.

14. Schelle nach einem der Ansprüche 1 bis 13, **dadurch gekennzeichnet, dass** das Unterteil (2) zumindest eine Bodendurchbrechung zum Durchführen eines Befestigers zum Festlegen des Unterteils (2) an einen Befestigungsgrund aufweist.

15. Schelle nach einem der Ansprüche 1 bis 14, **dadurch gekennzeichnet, dass** das Unterteil (2) und das Oberteil (3) spritzgegossene Kunststoffprodukte sind.
